# EUROPÄISCHE PATENTSCHRIFT

(11) **EP 1 852 482 B1**
(45) Veröffentlichungstag und Bekanntmachung des Hinweises auf die Patenterteilung: **28.01.2009**
(21) Anmeldenummer: 07008621.0
(22) Anmeldetag: 27.04.2007
(51) Int. Cl.: C09J 131/04

(54) **Parkettklebstoff und Verfahren zur Verhinderung oder Verminderung der Abgabe von organischen Lösungsmitteln aus Klebstoffen**
Parquet adhesive and method for preventing or reducing the emission of organic solvents from adhesives
Colle pour parquet et procédé destiné à éviter ou à réduire l'émission de solvants organiques provenant des colles.

(30) Priorität: 05.05.2006 DE 102006021325
(43) Veröffentlichungstag der Anmeldung: 07.11.2007
(73) Patentinhaber: Wakol GmbH, 66954 Pirmasens (DE)
(72) Erfinder: Hillert, Götz Dr., 66954 Pirmasens (DE); Schäfer, Martin Dr., 76829 Godramstein (DE); Fritz, Jürgen, 66989 Höheinöd (DE)
(74) Vertreter: Lucht, Silvia

(56) Entgegenhaltungen:
- DE-A1-0102004 045 71

## Beschreibung

Zur Verklebung von Parkett und anderen Boden-, Wand- und Deckenbelägen mit dem Untergrund werden Klebstoffe in flüssiger oder leicht pastöser Form auf den Untergrund aufgetragen und auf dem Untergrund verteilt. Die Klebstoffe müssen für eine Anwendung als Bodenbelagsklebstoff eine gewisse Scherfestigkeit aufweisen. Die Scherfestigkeit von Klebstoffen beschreibt das Vermögen eines Klebstoffes der seitlichen Schubkraft, welche auf einen Klebstoff einwirkt, standzuhalten. Insbesondere Parkettklebstoffe benötigen eine Scherfestigkeit, die ein Bewegen der verklebten Parkettstäbe beispielsweise durch Schrumpf- oder Quellbewegung bei Änderung der Holzfeuchte verhindert.

Häufig werden Reaktionsharze auf Polyurethanbasis eingesetzt Solche Zweikomponentenpolyurethansysteme haben aber den Nachteil einer nur begrenzten Topfzeit und eines sensibilisierenden und allergenen Potentials der monomeren Isocyanate. Hinzu kommt, dass Reaktionsharzparkettklebstoffe umfangreiche Arbeitsschutzmaßnahmen erfordern, einen vergleichsweise hohen Materialpreis haben, in exakt vorgegebenen Mischungsverhältnissen verarbeitet werden müssen und daher insgesamt nur aufwendig zu verarbeiten sind. Aus arbeitshygienischer Sicht eignen sie sich daher weniger, als wasserbasierende Dispersionsklebstoffe, zementhaltige Pulverklebstoffe und lösemittelhaltige Kunstharzklebstoffe. Gegenüber den wässrigen Dispersionsklebstoffen und Pulverklebstoffen haben wiederum lösungsmittelhaltige Kunstharzklebstoffe den technischen Vorteil, dass Sie dem verlegten Belag oder Parkett kein Wasser zuführen, wodurch ein Quelldruck - insbesondere im Falle von Holz - mit anschließendem Trocknungsschwund weitgehend unterbleibt. Dies ist mit ein Grund dafür, dass lösungsmittelhaltige Kunstharzklebstoffe auf diesem Gebiet noch immer bevorzugt sind und im Parkettbereich sogar Marktanteile von 65 bis 70 % aufweisen.

Die derzeit im Markt befindlichen lösungsmittelhaltigen Kunstharzklebstoffe bestehen aus Polymeren, Harzen (meist Polyvinylacetat), Füllstoffen (wie z.B. Kreide), Additiven und Lösungsmitteln. Der Lösungsmittelgehalt beträgt in der Regel zwischen etwa 16 und 25 Gew. %. Als Lösemittel kommen im wesentlichen aliphatische Ester (z.B. Methylacetat oder Ethylacetat), aliphatische Alkohole (z.B. Methanol, Ethanol oder Isopropanol) und aliphatische Ketone (wie Aceton oder Methylethylketon) in Frage.

Um bei der Verarbeitung von solchen Klebstoffen die erlaubten Lösemittel-Luftgrenzwerte im Arbeitsbereich einzuhalten, versucht man von vornherein mit möglichst wenig Lösemittel auszukommen und untoxische Lösemittel mit möglichst hohen Luftgrenzwerten einzusetzen. So kann z.B. ein Lösemittelgemisch von Aceton und Ethanol verwendet werden. Unter geeigneten Verarbeitungsbedingungen mit wenig Lösemittel können die Luftgrenzwerte so zwar ohne Probleme eingehalten werden, ein Nachteil dieses Lösungsansatzes ist jedoch, dass durch Reduzierung der Lösemittelmengen die Viskosität des Klebstoffgemischs unverhältnismäßig stark ansteigt und damit die Verarbeitungseigenschaften wie z.B. die Streichbarkeit eingeschränkt werden. Diesem Nachteil kann man durch den Einsatz von Polymeren und Harzen mit niedrigerem Molekulargewicht und damit verbundener nledriger Lösungsviskosität entgegenwirken. Dies führt jedoch wiederum im ausgehärteten Zustand zu einer unerwünschten Minderung der Festigkeitswerte.

Zur Einhaltung von Arbeitsplatzgrenzwerten werden, wie oben beschrieben, in lösemittelhaltigen Parkettklebstoffen häufig protisch polare Lösemittel wie Alkohole, insbesondere das hier eingesetzte Ethanol, verwendet. Hierbei ergibt sich ein weiterer Nachteil. Die protisch polaren Lösungsmittel verursachen, ähnlich wie Wasser, einen Quelldruck im Holz, was bewirkt, dass das Holz zunächst quillt und bei der anschließenden Verdampfung des Lösemittels wieder schrumpft. Das führt zu nachteiliger Verformung oder Fugenbildung im Parkett.

Darüber hinaus weisen die bisher bekannten lösemittelhaltigen Parkettklebstoffe folgenden, weiteren Nachteil auf: Durch das Abdunsten der Lösemittel nach dem Auftrag des Klebstoffes ist die Einlegzeit der Parkettstäbe begrenzt. Durch das Verdunsten des Lösemittels steigt die Viskosität des aufgetragenen Klebstoffes stark an und je nach System, Temperatur und Lüftungsbedingungen ist nach 10-20 Minuten ein Zustand erreicht, in dem der Klebstoff so pastös geworden ist, dass ein Übertrag auf das zu klebende Holz nicht mehr möglich ist. In der Praxis kann der Parkettleger dies feststellen, indem er den Parkettstab in das aufgebrachte Klebstoffbett einlegt, kurz andrückt, den Stab wieder aufnimmt und die rückseitige Benetzung des Parkettstabes beurteilt. Je nach Parkettart muss die Benetzung des Parkettstabs mindestens 40-70% der rückseitigen Fläche betragen. Bei komplizierten Verlegearbeiten, wie z.B. Fischgrätverlegung oder in Ecken und Winkeln, oder unter Heizungen, bei denen einzelne Stäbe passgenau zugeschnitten werden müssen, ist eine maximale Einlegezeit von 10-20 Minuten oft zu kurz und es kommt zur Überschreitung der Einlegezeit. In diesen Fällen muss erneut Klebstoff aufgetragen werden. Wird dies allerdings nicht erkannt, kommt es zu Fehiklebungen, die häufig erst später erkannt werden und aufwendige Sanierungsmaßnahmen erfordern.

Aufgabe der vorliegenden Erfindung ist daher die Bereitstellung eines lösemittelhaltigen Parkettklebstoffs, der die oben beschriebenen Nachteile, insbesondere ein unerwünschtes Quellverhalten des Parkettholzes und eine Belastung der Luft am Arbeitsplatz vermeidet und daher insbesondere auf dem Einsatz aprotisch polarer Lösungsmittel, wie z.B. flüchtigen Estern und Ketonen beruht. Eine besondere Aufgabe der Erfindung ist es, die Verdampfung der Lösemittel im Arbeitsbereich durch geeignete Maßnahmen vor, während und nach der Parkettbeschichtung so weit wie möglich zu verhindern, um eine möglichst lange Einlegezeit zu gewährleisten und um die Arbeitsplatzgrenzwerte sicher einzuhalten.

Gelöst werden konnte die Aufgabenstellung durch eine unmittelbar nach dem Auftrag des Klebstoffs auf der Oberfläche erzeugte Sperrschicht, die ein Entweichen flüchtiger Lösemittel weitestgehend verhindert. Die zu diesem Zweck erfindungsgemäß zugegebenen Hilfsstoffe erzeugen auf der Oberfläche des ausgebrachten Klebstoffs unmittelbar einen lösemittelundurchlässigen Film. Die Hilfsstoffe bilden rasch einen zusammenhängenden Film und sind in den polaren Lösemitteln des Klebstoffs nur gering löslich. Als Filmbildner besonders geeignet sind Wachse und Paraffine mit einem Schmelzbereich zwischen 40 und 60°C.

Die Filmbildner werden dem Klebstoff zunächst homogen zugemischt. Hierbei löst sich ein Teil. Sofort nach dem Auftragen der Klebstoffschicht auf den Boden wird durch Evaporation des Lösemittels in der obersten Schicht des ausgebreiteten Klebstoffes die Löslichkeit des im Klebstoff gelösten Filmbildners unterschritten, sodass er in der Grenzschicht zur Luft ausfällt und den gewünschten lückenlosen lösemittelundurchlässigen Film bildet.

Während der Schutzfilm im Kontakt mit der Umgebungsluft steht, werden die an sich flüchtigen Lösungsmittel auf diese Weise überraschend im Inneren der Schicht praktisch vollständig festgehalten und am Entweichen in den umgebenden Luftraum gehindert. Während der weiteren Arbeitsvorgänge wird der ausgebildete Schutzfilm durch das Einlegen der Parkettstäbe zerstört, so dass das Lösemittel nach Abschluss der Verlegearbeiten langsam durch die Holzschicht entweichen kann, wodurch der Klebstoff so rasch aushärten kann, dass ein Betreten des frisch verlegten Bodens schon nach wenigen Stunden ohne Verschub der Parkettstäbe möglich ist und die Grenzwerte bei normaler Lüftung für die entsprechenden Lösemittel auch während der weiteren Trocknungsphase nicht überschritten werden. Somit wird sichergestellt, dass Beeinträchtigungen der Gesundheit der mit der Arbeit befassten Personen durch Lösemittel erfindungsgemäß zu jedem Zeitpunkt der Parkettverlegung ausgeschlossen sind. Darüber hinaus bewirkt der so erzielte Effekt - das Zurückhalten der Lösemittel im Kontakt mit Luft-dass die Einlegezeit signifikant verlängert wird. So können im Vergleich zu den dem Stand der Technik entsprechenden Klebstoffen mit Einlegezeiten von 10-20 Minuten durch die vorliegende Erfindung Einlegezeiten von mehreren Stunden realisiert werden. Der Bodenverleger kann dadurch bequem innerhalb der verlängerten Einlegezeit den Zeitpunkt auswählen, zu dem der Klebevorgang erfolgen soll. In dem Moment, wo die Klebekraft des Klebstoffs benötigt wird, wird gezielt der Schutzfilm durch das Einlegen der Parkettelemente zerstört.

Aus der DE-A 103 36 360 ist es bereits bekannt, radikalisch polymerisierbaren Reaktivharzen auf der Basis von Acrylaten und/oder Methacrylaten, die als schnell härtende Beschichtungsstoffe zum Beispiel für Fußböden Verwendung finden, Paraffine oder Wachse zuzusetzen, um nach dem Auftragen des Harzes z.B. auf den Boden eine gegen Sauerstoff undurchlässige Schicht zu erzeugen und so Störungen durch die so genannte "Sauerstoffinhibierung" zu vermeiden, welche zu klebrigen, teilweise sogar flüssigen Oberflächen führt, was insbesondere bei Fußbodenbelägen natürlich nicht hinnehmbar ist. Der Grund für die mangelnde. Polymerisation auf der Oberfläche unter Sauerstoffeinfluss beruht auf einer Störungen des radikalischen Polymerisationsmechanismus durch molekularen Sauerstoff, und zwar nicht nur unmittelbar auf der Oberfläche, sondern auch in tiefer liegenden Schichten. Durch eine Beschichtung der Oberfläche mit Wachsen oder Paraffinen kann nun durch die Verhinderung der Sauerstoffpermeabilität die Polymerisation der monomeren Acrylate ohne den störenden Einfluss von Sauerstoffradikalen ablaufen. Um Ausdünstungen von flüchtigen Kunststoffkomponenten am Arbeitsplatz zu verhindern, wurde bei der Auswahl der Polymerisationskomponenten von zu Geruchsbelästigungen führenden kurzkettigen und niedrigsiedenden Acrylatkomponenten auf solche mit einem Siedepunkt von über 120 °C ausgewichen, die aufgrund ihrer geringen Flüchtigkeit keine Geruchsbelästigung mit sich bringen können. Dieser "Umweg" musste seinerzeit beschritten werden, da die Sperrwirkung von oberflächlichen lipophilen Schichten gegenüber niedrigsiedenden und daher leicht flüchtigen organischen Komponenten noch nicht erkannt worden war.

Bei Parkettklebstoffen liegen, wie gesagt, völlig andere Verhältnisse vor, als bei Bindemitteln auf Acrylatbasis. Die hier anzuwendenden vorzugsweise aprotischen polaren Lösemittel, wie niedere Ester und Ketone sind alle geruchsintensiv und haben einen Siedepunkt weit unterhalb von 120 °C, Wenn man die oben beschriebenen Vorteile dieser Komponenten nutzen will, muss daher dafür gesorgt werden, dass zwischen dem Auftragen des Klebers auf dem Boden und dem Verlegen des Parketts auf der aufgetragenen Kleberschicht möglichst wenig flüchtige Lösungsmittel entweichen können.

Es hat sich nun überraschenderweise gezeigt, dass die erfindungsgemäße Zugabe von nur sehr wenig Paraffin oder Wachs zu dem aufzutragenden Klebstoff sofort dazu führt, dass das teilweise gelöste Sperrmittel, wie z.B. Wachs in der aufgetragenen dünnen Schicht "aufschwimmt" und auf der Oberfläche eine wirksame zusammenhängende und gegen Lösemitteldämpfe undurchlässige Schicht bildet, obwohl Ketone und Ester als typisch lipophile Stoffe sich gegenüber einer ebenfalls lipophilen Wachs- oder Paraffinschicht eigentlich grundsätzlich anders verhalten sollten als molekularer Sauerstoff.

Es war daher für den Fachmann nicht vorherzusehen, dass sich ausgerechnet lipophile Schichten gegenüber lipophilen Lösungsmitteln als äußerst wirksame Sperrschichten eignen. Für den Überraschungseffekt spricht insbesondere auch die Tatsache, dass man im Falle der DE-A103 36 360 auf ein Ausweichen auf weniger flüchtige geruchsfreie Monomere hätte verzichten können, wenn erkannt worden wäre, dass die Sauerstoffbarriere auch niedermolekulare flüchtige organische Verbindungen wirksam an der Durchdringung der Sperrschicht hindert. Es ist auch nicht zu erwarten gewesen, dass bereits eine Zugabe von nur 0,05 Gew.% Paraffin (bevorzugt 0,2 bis 3 Gew.%) bereits den gewünschten Effekt erzeugt. Ein höherer Gehalt an Paraffin stört allerdings nicht, solange die Festigkeit des getrockneten Klebers letztlich nicht darunter leidet. Gemäß DE-A 103 36 360 ist es zur Ausbildung einer Sperrschicht gegen Luftsauerstoff hingegen außerdem förderlich als Komponente C eine an der Luft trocknende ungesättigte organische Verbindung wie Butadien zur Festigung der Sperrschicht zuzugeben. Dies erübrigt sich bei der vorliegenden Erfindung. Durch die erfindungsgemäße Ausbildung einer Sperrschicht gegen störende Lösungsmitteldämpfe wird die Parkettbeschichtung nicht nur außerordentlich erleichtert, sondern es wird auch sichergestellt, dass die vorgeschriebenen Arbeitsplatzgrenzwerte in jeder Arbeitsphase eingehalten werden.

### Allgemeine Beschreibung der Klebstoffzusammensetzung in Gew.%:

Komponente A (Lösemittel) 15-25 %
Komponente B (thermoplastisches Polymer) 5-14 %
Komponente C (Harze) 5-25 %
Komponente D (Füllstoffe) 30-60 %
Komponente E (filmbildende Komponente) 0,05 -2 %
Komponente F zu 100 % ergänzende Zusatzstoffe

### Komponente A:

Als Lösemittel kommen prinzipiell aliphatische und cycloaliphatische Kohlenwasserstoffe (z.B. Hexan, Heptan, Octan, Methylcyclohexan), Ester (z.B. Methylacetat, Ethylacetat, Methoxypropylacetat, Butylacetat), aliphatische Alkohole (z.B. Ethanol, lsopropanol), aliphatische Ketone (z.B. Aceton, Methylethylketon, Methylisobutylketon) in Frage.

### Komponente B:

Polyvinylacetat und/oder ähnliche Polymere

### Komponente C:

Als Harze kommen Naturharze (z.B. Balsamharze, Kolophoniumharze, Tallharze), Ester der Naturharze (z.B. Glycerin-, Pentaeritritol-Ester), synthetische phenolmodifizierte und nicht phenolmodifizierte Kohlenwasserstoffharze in Frage. Bevorzugt kommen synthetische Kohlenwasserstoffharze in Frage, besonders bevorzugt sind Copolymerisate aus petrostämmigen C9-Kohlenwasserstoffen und Phenol.

### Komponente D:

Als Füllstoffe kommen prinzipiell anorganische Füllstoffe wie z.B. Calciumcarbonat, Calciumsulfat, Bariumsulfat, Silikate usw. in Frage. Bevorzugt werden natürliche ungecoatete Kreiden eingesetzt.

### Komponente E:

Als filmbildende Komponente kommen alle Substanzen in Frage, die in dem Harz - Polymer - Lösungsmittelgemisch eine geringe Löslichkeit besitzen, so dass sich beim Auftragen des Films durch Lösungsmittelevaporation eine lösemittelundurchlässige Oberflächenschicht ausbildet. Da es sich bei den Polymeren sowie bei den Lösungsmitteln um lipophile Substanzen handelt, eignen sich hierfür besonders unpolare Wachse und Paraffine. Zu geeigneten Substanzen gehören unter anderem Paraffine, mikrokristalline Wachse, Carnauba-Wachs, Bienen-Wachs, Lanolin, Walfischtran, Polyolefinwachse, Ceresin, Candelilla-Wachse und dergleichen. Als besonders geeignet haben sich aber Paraffine mit einem Schmelzbereich zwischen 40 und 60°C erwiesen.

### Komponente F:

Als zusätzliche Komponenten werden Additive wie Weichmacher, z.B. Phthalsäureester wie z.B. Diisobutylphthalat oder Diisononylphthalat, Entschäumer z.B. Silikonentschäumer, Rheologiehilfsmittel z.B. Bentone und/oder Dispergierhilsmittel z.B. Acrylatpolymere mit sauren oder basischen Gruppen eingesetzt.

Die folgenden Beispiele dienen lediglich der Erläuterung der Erfindung und sollen diese in keiner Weise beschränken:

### BEISPIEL 1 (Vergleichsbeispiel)

Es wird ein Klebstoff unter Verwendung folgender Komponenten hergestellt. Die Prozentangaben beziehen sich alle auf das Komponentengewicht (Gew.%):
6,5 % Aceton
11,5 % Methylacetat
15,5 % phenolmodifiziertes Kohlenwasserstoffharz (Novares® TNA 80, Fa. Rüttgers)
4,0 % Polyvinylacetat mittl. Molekulargewicht ca. 245.000 g/mol (Mowilith® 60, Harco)
7,0 % Polyvinylacetat mittl. Molekulargewicht ca. 85.000 g/mol (Mowilith® 30, Harco)
55,5 % Calciumcarbonat Füllstoff Mikrosöhl® Kreide 40
FK Gehalt: 82 %
Die Viskosität des Klebstoffs nach Brookfield 6/10 bei 23°C betrug ca. 70.000 mPas.

### BEISPIEL 2

Es wird ein Klebstoff unter Verwendung folgender Komponenten hergestellt. Die Prozentangaben beziehen sich alle auf das Komponentengewicht (Gew.%):
6,5 % Aceton
11,5 % Methylacetat
15,5 % Phenol-modifiziertes Kohlenwasserstoffharz (Novares® TNA 80, Fa. Rüttgers)
4,0 % Polyvinylacetat mittl. Molekulargewicht ca. 245.000 g/mol (Mowilith® 60, Harco)
7,0 % Polyvinylacetat mittl. Molekulargewicht ca. 85.000 g/mol (Mowilith® 30, Harco)
55 % Calciumcarbonat Füllstoff Mikrosöhl® Kreide 40
0,5 % Paraffinwachs Schmp. 42-44°C, Fa. Merck
FK Gehalt: 82 %
Viskosität nach Brookfield (Vgl. Beispile1): 6/10 23°C: ca. 70.000 mPas

Durch Aufbringen mit einer Zahnspachtel B 11 werden auf einer Spanplatte V 100 (30 x 60 cm) ca. 180 g Klebstoff aufgetragen. Direkt nach dem Klebstoffauftrag wird die Spanplatte auf eine Laborwaage mit 2 Nachkommastellen gelegt und über einen Zeitraum von 20 Minuten die Gewichtsabnahme im Minutenabstand bestimmt. Die Gewichtsabnahme entspricht direkt der emittierten Lösemittelmenge (Abb. 1).

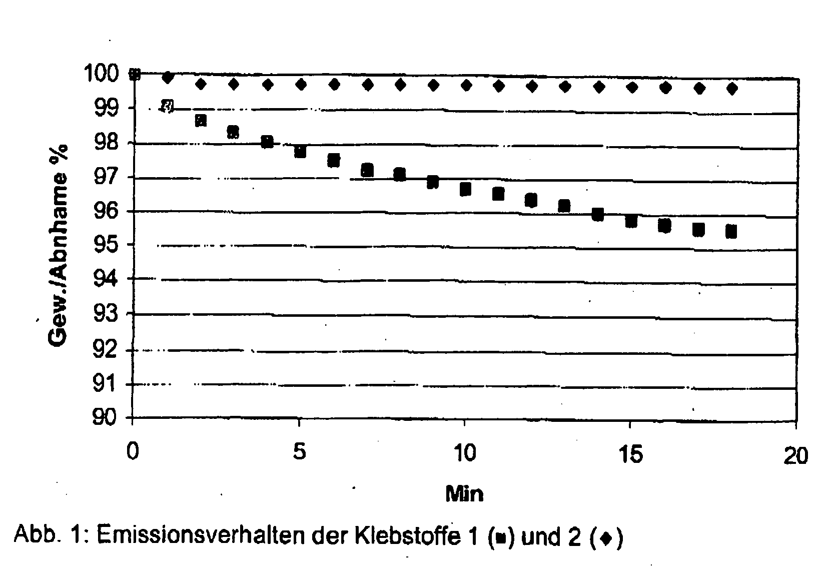

Während der Klebstoff 1 innerhalb der Einlegezeit (20 Minuten) ca. 4 % Lösemittel emittiert, werden durch den erfindungsgemäßen Einsatz von Paraffin im Klebstoff 2 die Lösungsmittel praktisch vollständig zurückgehalten und man findet nach 20 Minuten kaum einen Verlust (0,4 %). Die Lösemittelemissionen während der Verarbeitung werden also etwa um einen Faktor 10 reduziert. Arbeitsplatzmessungen der Luftwerte haben gezeigt, dass die Luftgrenzwerte während der Parkettverlegung auch unter ungünstigen Bedingungen (geschlossene Fenster, geringer Luftwechsel) deutlich unterschritten werden. Hierzu wurde während einer 2-stündigen Verarbeitung der Klebstoffe 1 und 2 eine Arbeitsplatzmessung mittels eines ORSA-Passivsammlers durchgeführt. Die während der Verarbeitung gesammelten VOC's wurden anschließend quantitativ analysiert. Hierbei haben sich folgende Werte ergeben:

| | Beispiel 1 | Beispiel 2 | Arbeitsplatzgrenzwert |
|---|---|---|---|
| Aceton | 429 mg/m³ | 117 mg/m³ | 1200 mg/m³ |
| Methylacetat | 583 mg/m³ | 209 mg/m³ | 600 mg/m³ |
| Summenfaktorbewertung | 1,31 | 0,44 | < 1 |

Um die Arbeitsplatzgrenzwerte von mehrkomponentigen Lösemittetsystemen zu bewerten, wird der jeweilige Einzelwert ins Verhältnis zu seinem Grenzwert gesetzt und die so gebildeten Quotienten addiert. Die Summe muss hierbei < 1 sein damit eine Gesamteinhaltung der Arbeitsplatzgrenzwerte gegeben ist. Wie die Ergebnissen der Arbeitsplatzmessungen zeigen, wird im Falle des Vergleichsbeispiels der Grenzwert mit 1,31 deutlich über und im Beispiel 2 mit 0,44 signifikant unterschritten.

### Bestimmung der maximalen Einlegezeit:

Durch Aufbringen mit einer Zahnspachtel B 11 werden auf einer Spanplatte V 100 (30 x 60 cm) ca. 180 g Klebstoff aufgetragen. In Abständen von 5 Minuten werden in das Klebstoffbett Parkettstäbe Eiche (160 mm x 30 mm x 8 mm) eingelegt, kurz angedrückt, wieder aufgenommen und die Klebstoffbenetzung auf der Rückseite des Holzstabes beurteilt. Wie die nachfolgende Tabelle zeigt, ist bei dem dem Stand der Technik entsprechenden Klebstoff die maximale Einlegezeit nach 10-20 Minuten überschritten, wohingegen bei dem erfindungsgemäßen Klebstoff 2 die maximale Einlegezeit nach 2 Stunden noch nicht erreicht wird.

| Zeit [min] | Beispiel 1 Rückseitige Benetzung | Beispiel 2 Rückseitige Benetzung |
|---|---|---|
| 5 | 95 % | 95 % |
| 10 | 90 % | 95 % |
| 15 | 80 % | 95 % |
| 20 | 60 % | 95 % |
| 25 | 33 % | 95 % |
| 30 | 10 % | 95 % |
| 35 | 0 % | 95 % |
| 40 | 0 % | 95 % |
| 45 | 0 % | 95 % |
| 50 | 0 % | 95 % |
| 55 | 0 % | 95 % |
| 60 | 0 % | 95 % |
| 65 | 0 % | 95 % |
| 70 | 0 % | 95 % |
| 75 | 0 % | 95 % |
| 80 | 0 % | 95 % |
| 85 | 0 % | 95 % |
| 90 | 0 % | 95 % |
| 95 | 0 % | 95 % |
| 100 | 0 % | 95 % |
| 105 | 0 % | 95 % |
| 110 | 0 % | 95 % |
| 115 | 0 % | 95 % |
| 120 | 0 % | 95 % |

### Bestimmung der Festigkeitsentwicklung:

Zur Bestimmung der Festigkeitsentwicklung werden Klebungen entsprechend der DIN Norm 281 angefertigt. Nach 1, 3 und 28 Tagen werden die Zugscherfestigkeiten entsprechend DIN 281 bestimmt. Folgende Werte haben sich ergeben:

| | **Beispiel 1** | **Beispiel 2** |
|---|---|---|
| Tage | N/mm² | N/mm² |
| 1 | 1,7 | 1,5 |
| 3 | 3,7 | 3,5 |
| 28* | 4,8 | 4,5 |

| | | |
|---|---|---|
| * Temperaturwechselzyklus: 1 d: 23°C, 21 d: 40°C, 6 d: 23°C | | |

Wie die Werte zeigen, entspricht die erfindungsgemäße Formulierung des Beispiels 2 den Anforderungen der DIN 281 für schubfeste Parkettklebstoffe. Der Einsatz von Wachsen und/oder Paraffinen als Lösemittel zurückhaltende Stoffe funktioniert auch mit anderen Lösungsmittelgemischen z.B. ternären Gemischen aus Aceton, Methylacetat und Ethanol und in höheren Lösemittelkonzentrationen z.B. bis 25%. Klebstoffe mit höheren Lösemittelgehalten können mit Polymeren höherer Molekulargewichte formuliert werden, die zum schnelleren Aufbau höherer Festigkeitswerte führen, was für einige Parkett- und Holzarten mehr Sicherheit bezüglich der Verformungsstabilität gewährleistet. Dies wird durch folgende Anwendungsbeispiele belegt:

### BEISPIEL 3 (Vergleichsbeispiel)

Es wird ein Klebstoff unter Verwendung folgender Komponenten hergestellt.
Die Prozentangaben beziehen sich alle auf das Komponentengewicht (Gew.%):
4,0 % Aceton
14,0 % Ethanol
16,5 % Phenol-modifiziertes Kohlenwasserstoffharz (Novares® TNA 80, Fa. Rüttgers)
7,0 % Polyvinylacetat mittl. Molekulargewicht ca. 245.000 (Mowilith® 60, Harco)
3,0 % Polyvinylacetat mittl. Molekulargewicht ca. 85.000 g/mol (Mowilith 30, Harco)
55,5 % Calciumcarbonat Füllstoff Mikrosöhl® Kreide 40
FK Gehalt: 82 %
Viskosität Brookfield (Vgl. Beispiel 1) 6/10 23°C: ca. 90.000 mPas

### BEISPIEL 4

Es wird ein Klebstoff unter Verwendung folgender Komponenten hergestellt. Die Prozentangaben beziehen sich alle auf das Komponentengewicht (Gew.%):
4,0 % Aceton
14,0%Ethanol
16,5 % Phenol-modifiziertes Kohlenwasserstoffharz (Novares® TNA 80, Fa. Rüttgers)
7,0 % Polyvinylacetat mittl. Molekulargewicht ca. 245.000 (Mowilith® 60, Harco)
3,0 % Polyvinylacetat mittl. Molekulargewicht ca. 85.000 g/mol (Mowilith® 30, Harco)
55 % Calciumcarbonat Füllstoff Mikrosöhl® Kreide 40
0,5 % Paraffinwachs Schmp. 42-44°C, Fa. Merck
FK Gehalt: 82 %
Viskosität Brookfield (vgl. Beispiel 1) 6/10 23°C: ca. 90.000 mPas

### BEISPIEL 5

Es wird ein Klebstoff unter Verwendung folgender Komponenten hergestellt. Die Prozentangaben beziehen sich alle auf das Komponentengewicht (Gew.%):
8,0 % Aceton
6,0 % Methylacetat
8,5 % Ethanol
9,0 % Phenol-modifiziertes Kohlenwasserstoffharz (Novares TNA 80, Fa. Rüttgers)
7,0 % Polyvinylacetat mittl. Molekulargewicht ca. 245.000 (Mowilith® 60, Harco)
6,0 % Polyvinylacetat mittl. Molekulargewicht ca. 85.000 g/mol (Mowllith® 30, Harco)
55,0 % Calciumcarbonat Füllstoff Mikrosöhl® Kreide 40
FK Gehalt: 77,5 %
Viskosität Brookfield 6/10 23°C: ca. 30.000 mPas

### BEISPIEL 6

Es wird ein Klebstoff unter Verwendung folgender Komponenten hergestellt,
Die Prozentangaben beziehen sich alle auf das Komponentengewicht (Gew.%):
8,0 % Aceton
6,0 % Methylacetat
8,5 % Ethanol
9,0 % Phenol-modifiziertes Kohlenwasserstoffharz (Novares® TNA 80, Fa. Rüttgers)
7,0 % Polyvinylacetat mittl. Molekulargewicht ca. 245.000 g/mol (Mowilith® 60, Harco)
6,0 % Polyvinylacetat mittl. Molekulargewicht ca. 85.000 g/mol (Mowilith® 30, Harco)
54,5 % Calciumcarbonat Füllstoff Mikrosöhl® Kreide 40
0,5 % Paraffinwachs Schmp. 42-44°C, Fa. Merck
FK Gehalt: 77,5 %
Viskosität Brookfield (Vgl. Beispiel1) 6/10 23°C: ca. 30.000 mPas

Durch Aufbringen mit einer Zahnspachtel B 11 werden auf einer Spanplatte V 100 (30 x60 cm) ca. 180 g Klebstoff aufgetragen. Direkt nach dem Klebstoffauftrag wird die Spanplatte auf eine Laborwaage mit 2 Nachkommastellen gelegt und über einen Zeitraum von 20 Minuten die Gewichtsabnahme im Minutenabstand bestimmt. Die Gewichtsabnahme entspricht direkt der emittierten Lösemittelmenge (Siehe Abb. 3).

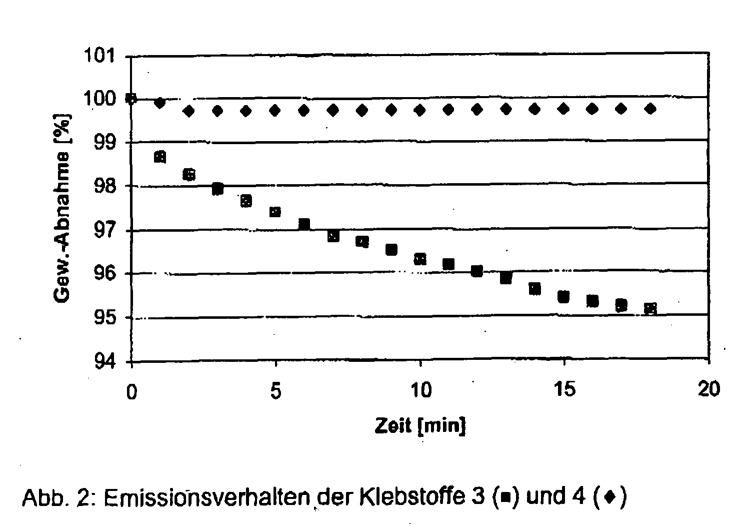

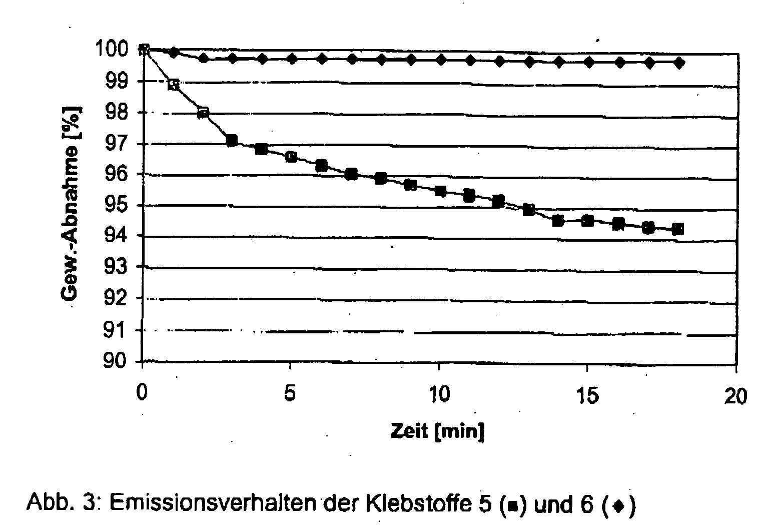

Auch in diesen Anwendungsbeispielen zeigt sich im Falle der paraffinmodifizierten Rezepturen ein deutlich günstigeres Evaporationsverhalten als in den Klebstoffen die dem Stand der Technik entsprechen. Die Lösemittelemissionen während der Verarbeitung werden auch hier ca. um den Faktor 10 reduziert. Arbeitsplatzmessungen der Luftwerte haben gezeigt, dass die Luftgrenzwerte während der Parkettverlegung auch unter ungünstigen Bedingungen (geschlossene Fenster, geringer Luftwechsel) deutlich unterschritten werden

### Bestimmung der maximalen Einlegezeit:

Durch Aufbringen mit einer Zahnspachtel B 11 werden auf einer Spanplatte V 100 (30 x 60 cm) ca. 180 g Klebstoff aufgetragen. In Abständen von 5 Minuten werden in das Klebstoffbett Parkettstäbe Eiche (160 mm x 30 mm x 8 mm) eingelegt, kurz angedrückt, wieder aufgenommen und die Klebstoffbenetzung auf der Rückseite des Holzstabes beurteilt. Wie die nachfolgende Tabelle zeigt, sind bei den dem Stand der Technik entsprechenden Klebstoffen 3 und 5 die maximalen Einlegezeiten nach 10-20 Minuten überschritten, wohingegen bei dem erfindungsgemäßen Klebstoff 4 und 6 die maximalen Einlegezeiten nach 2 Stunden noch nicht erreicht wurden.

| Zeit [min] | Beispiel 3 Rückseitige Benetzung | Beispiel 4 Rückseitige Benetzung | Beispiel 5 Rückseitige Benetzung | Beispiel 6 Rückseitige Benetzung |
|---|---|---|---|---|
| 5 | 95 % | 95 % | 95 % | 95 % |
| 10 | 90 % | 95 % | 95 % | 95 % |
| 15 | 85 % | 95 % | 90 % | 95 % |
| 20 | 70 % | 95 % | 80 % | 95 % |
| 25 | 40 % | 95 % | 60 % | 95 % |
| 30 | 20 % | 95 % | 40 % | 95 % |
| 35 | 10% | 95 % | 10 % | 95 % |
| 40 | 0 % | 95 % | 0 % | 95 % |
| 45 | 0 % | 95 % | 0 % | 95 % |
| 50 | 0 % | 95 % | 0 % | 95 % |
| 55 | 0 % | 95 % | 0 % | 95 % |
| 60 | 0 % | 95 % | 0 % | 95 % |
| 65 | 0 % | 95 % | 0 % | 95 % |
| 70 | 0 % | 95 % | 0 % | 95 % |
| 75 | 0 % | 95 % | 0 % | 95 % |
| 80 | 0 % | 95 % | 0 % | 95 % |
| 85 | 0 % | 95 % | 0 % | 95 % |
| 90 | 0 % | 95 % | 0 % | 95 % |
| 95 | 0 % | 95 % | 0 % | 95 % |
| 100 | 0 % | 95 % | 0 % | 95 % |
| 105 | 0 % | 95 % | 0 % | 95 % |
| 110 | 0 % | 95 % | 0 % | 95 % |
| 115 | 0 % | 95 % | 0 % | 95 % |
| 120 | 0 % | 95 % | 0 % | 95 % |

### Bestimmung der Festigkeitsentwicklung:

Zur Bestimmung der Festigkeitsentwicklung werden Klebungen entsprechend der DIN Norm 281 angefertigt. Nach 1,3 und 28 Tagen werden die

Zugscherfestigkeiten entsprechend DIN 281 bestimmt. Folgende Werte haben sich ergeben:

| | **Beispiel 3** | **Beispiel 4** | **Beispiel 5** | **Beispiel 6** |
|---|---|---|---|---|
| Tage | N/mm² | N/mm² | N/mm² | N/mm² |
| 1 | 1,5 | 1,4 | 4 | 3,4 |
| 3 | 3,5 | 3,3 | 5,9 | 4,9 |
| 28* | 3,9 | 4 | 6 | 5,6 |

| | | | | |
|---|---|---|---|---|
| * Temperaturwechselzyklus: 1 d: 23°C, 21 d: 40°C, 6 d: 23°C | | | | |

Wie die Werte zeigen, entspricht erfindungsgemäße Formulierungen der Beispiele 4 und 6 den Anforderungen der DIN 281 für schubfeste Parkettklebstoffe.

Der Einsatz vom Paraffin kann natürlich auch in lösungsmittelhaltigen Klebstoffsystemen für andere Bodenbeläge wie z.B. in Teppichbodenbeläge eingesetzt werden. Diese Klebstoffsysteme bestehen ähnlich wie die Parkettklebstoffe aus Lösemitteln, polymeren Bindemitteln und haftungsverbessernden Harzen. Folgende Beispiele sollen zeigen, dass die Sperrwirkung der Paraffine grundsätzlich auch in diesen Systemen funktioniert:

### Beispiel 7 (Vergleichsbeispiel)

| | |
|---|---|
| 6 % | Aceton |
| 4 % | Ethanol |
| 3 % | Spezialbenzin Sdp. 60-95°C |
| 17 % | Balsamharz |
| 5 % | Glycerinharzester |
| 5 % | Polyvinylethylether (Lutanol A 50, BASF) |
| 60 % | Mikrasöl 40 (Kreide; Füllstoff) |

| | |
|---|---|
| FK Gehalt: 85,5 % Viskosität Brookfield 6/10 23°C: ca. 40.000 mPas | |

### Beispiel 8

| | |
|---|---|
| 6 % | Aceton |
| 4 % | Ethanol |
| 3 % | Spezialbenzin Sdp. 60-95°C |
| 17 % | Balsamharz |
| 5 % | Glycerinharzester |
| 5 % | Polyvinylethylether (Lutanol A 50, BASF) |
| 59,3 % | Mikrosöl 40 (Kreide; Füllstoff) |
| 0,7 % | Paraffinwachs Schmp. 42-44°C, Fa. Merck |

| | |
|---|---|
| FK Gehalt: 85,5 % Viskosität Brookfield 6/10 23°C: ca. 40.000 mPas | |

Durch Aufbringen mit einer Zahnspachtel B 1 werden auf einer Spanplatte V 100 (30 x60 cm) ca. 100 g Klebstoff aufgetragen. Direkt nach dem Klebstoffauftrag wird die Spanplatte auf eine Laborwaage mit 2 Nachkommastellen gelegt und über einen Zeitraum von 15 Minuten die Gewichtsabnahme im 5-Minutenabstand bestimmt. Die Gewichtsabnahme entspricht direkt der emittierten Lösemittelmenge.

| | Beispiel 7 | Beispiel 8 |
|---|---|---|
| Lösemittelverlust nach 5 Min. | 1,2 % | 0,25 % |
| Lösemittelverlust nach 10 Min. | 2,3 % | 0,25 % |
| Lösemittelverlust nach 15 Min | 3,7 % | 0,25 % |

Wie die Beispiele zeigen beträgt die Lösemittelemission des Vergleichsbeispiels innerhalb des Einlegezeitraums von 15 Minuten des Klebstoffsystems 7 ca. 3,7 % wohingegen das Klebstoffsystem Beispiel 8 nur 0,25 % emittiert.

## Patentansprüche

1. Verfahren zur Verhinderung oder Verminderung der Abgabe von organischen Lösungsmitteln aus flüssigen, schubfesten Parkettklebstoffen mit einer Scherfestigkeit über zwei Newton/mm² an die umgebende Luft vor, während und nach den Verlagsarbeiten des Belags oder der Parkettstäbe, **dadurch gekennzeichnet, dass** man dem die Lösungsmittel enthaltenden und aus organischem Lösungsmittel, löslichen Bindemittelanteilen und anorganischen Füllstoffen und/oder Hilfsstoffen bestehenden Klebstoff vor dem Ausbringen mindestens eine Substanz zusetzt, welche nach dem Verteilen des Klebstoffs auf einer Oberfläche eine die Durchdringung der leicht flüchtigen Lösungsmittel in die umgebende Luft verhindernde Sperrschicht ausbildet.

2. Verfahren nach Anspruch 1, **dadurch gekennzeichnet, dass** die die Sperrschicht bildenden Substanzen Paraffine oder wachsartige Substanzen sind, welche in dem verwendeten Lösungsmittelgemisch, nur teilweise löslich sind.

3. Verfahren nach Anspruch 1 oder 2, **dadurch gekennzeichnet, dass** dem Klebstoff 0,05 bis 5 Gew.% Paraffine oder wachsartige Substanzen zugegeben werden.

4. Verfahren nach Anspruch 1 bis 3, **dadurch gekennzeichnet, dass** der Bindemittelanteil mindestens aus einer Harz und/oder einer Polymerkomponente besteht.

5. Verfahren nach Anspruch 1 bis 4, **dadurch gekennzeichnet, dass** als Harzkomponente natürliche Harze und/oder synthetische Harze verwendet werden.

6. Verfahren nach Anspruch 5, **dadurch gekennzeichnet, dass** die synthetischen Harze aus der Familie der hydroxyl-modifizierten Inden-Cumaron-Harze oder der phenol-modifizierten Kohlenwasserstoffharze stammen.

7. Verfahren nach Anspruch 1 bis 6, **dadurch gekennzeichnet, dass** als Polymerkomponente Polymere aus der Gruppe der Vinylester, Vinylether, Acrylsäurester, Methacrylsäureseter, Styrol, Butadiene, Isoprene oder deren Copolymere verwendet werden.

8. Verfahren nach Anspruch 1 bis 7, **dadurch gekennzeichnet, dass** als Füllstoff und anorganischer Hilfsstoff Calciumcarbonat, Calciumsulfat, Bariumsulfat, Silikate oder Mischungen aus diesen Stoffen verwendet werden.

9. Verfahren nach Anspruch 1 bis 8, **dadurch gekennzeichnet, dass** als Lösungsmittel aliphatische Kohlenwasserstoffe, cycloaliphatische Kohlenwasserstoffe, Ester, aliphatische Alkohole, aliphatische Ketone oder Mischungen aus diesen verwendet werden.

10. Parkettklebstoff gemäß den Ansprüchen 1 bis 9 mit einem Gehalt an 0,05 bis 5 Gew.% einer filmbildenden Komponente, umfassend Paraffine, mikrokristalline Wachse, Carnaubawachs, Bienenwachs, Lanolin, Walfischtran, Polyolefinwachse, Ceresin, Candelillawachs und verwandte wachsartige Substanzen.

11. Verwendung von Paraffinen, mikrokristallinen Wachsen, Camaubawachs, Bienenwachs, Lanolin, Walfischtran, Polyolefinwachsen, Ceresin, Candelillawachs und verwandten wachsartigen Substanzen als filmbildende und die Permeabilität von organischen Lösungsmitteln mit einem Siedepunkt unterhalb 100 °C verhindernde filmbildende Substanzen in Belags- und Parkettklebestoffen.

12. Verwendung nach Anspruch 11, wobei die filmbildenden Substanzen in einer Menge von 0,05 bis 5 Gew.% bezogen auf die Summe der übrigen Komponenten des Klebstoffs eingesetzt werden.

## Claims

1. Method for preventing or reducing organic solvent emissions into the surrounding air from liquid, shear-resistant parquet adhesives with a shear resistance over two Newton/mm², during and after the laying of the flooring or the parquet strips, **characterised in that**, before application, at least one substance is added to the adhesive containing the solvent and made up of organic solvents, soluble bonding agent components and inorganic fillers and/or additives, where said substance develops a barrier layer to prevent the penetration of the volatile solvents into the surrounding air after the adhesive has been applied to the surface.

2. Method according to claim 1, **characterised in that** the substances forming the barrier layer are paraffins or waxy substances, which are only partially soluble in the solvent mixture used.

3. Method according to claim 1 or 2, **characterised in that** 0.05 to 5 % by weight of paraffins or waxy substances are added to the adhesive.

4. Method according to claims 1 to 3, **characterised in that** the bonding agent portion consists of at least one resin and/or one polymer component.

5. Method according to claims 1 to 4, **characterised in that** natural resins and/or synthetic resins are used as the resin component.

6. Method according to claim 5, **characterised in that** the synthetic resins are derived from the hydroxyl-modified coumarone-indene resin family or phenol-modified hydrocarbon resin family.

7. Method according to claim 1 to 6, **characterised in that** polymers from the group of vinyl esters, vinyl ethers, acrylic acid esters, methacrylic acid esters, styrenes, butadiens, isoprenes or its copolymers are used as the polymer component.

8. Method according to claims 1 to 7, **characterised in that** calcium carbonate, calcium sulphate, barium sulphate, silicates or mixtures of these substances are used as the filler and inorganic additive.

9. Method according to claims 1 to 8, **characterised in that** aliphatic hydrocarbons, cycloaliphatic hydrocarbons, esters, aliphatic alcohols, aliphatic ketones or mixtures of these are used as solvent.

10. Parquet adhesive according to claims 1 to 9 with a content of between 0.05 and 5 % by weight of a film-forming component, comprising paraffins, microcrystalline waxes, carnauba wax, beeswax, lanolin, whale oil, polyolefin waxes, ceresin, candelilla wax, and related waxy substances.

11. Use of paraffins, microcrystalline waxes, carnauba wax, beeswax, lanolin, whale oil, polyolefin waxes, ceresin, candelilla wax and related waxy substances as film-forming substances to prevent the permeability of organic solvents with a boiling point below 100 °C in flooring and parquet adhesives.

12. Use according to claim 11, whereby the film-forming substances are used in a quantity of 0.05 to 5 % by weight relative to the sum of the remaining components of the adhesive.

## Revendications

1. Procédé destiné à éviter ou à réduire l'émission dans l'air ambiant avant, pendant et après la pose des lames de parquet, de solvants organiques provenant des colles fluides pour parquet présentant une résistance au cisaillement supérieure à deux Newton/mm², **caractérisé en ce que** l'on ajoute, avant la mise à l'air, au moins une substance à la colle composée de solvants organiques, de parts de liant soluble ainsi que de matières de charge et/ou d'adjuvants inorganiques et contenant les dits solvants, cette substance formant une couche de barrage empêchant la pénétration des solvants volatiles dans l'air ambiant après l'application de la colle sur une surface.

2. Procédé selon la revendication 1, **caractérisé en ce que** les substances formant la couche de barrage sont des paraffines ou des substances cireuses qui ne sont que partiellement solubles dans le mélange de solvants utilisé.

3. Procédé selon la revendication 1 ou 2, **caractérisé en ce que** l'on ajoute à la colle une quantité de paraffines ou de substances cireuses correspondant à un pourcentage en poids compris entre 0,05 et 5 %.

4. Procédé selon les revendications 1 à 3, **caractérisé en ce que** la part de liant se compose au moins d'une résine et/ou d'un composant polymère.

5. Procédé selon les revendications 1 à 4, **caractérisé en ce que** des résines naturelles et/ou des résines synthétiques sont utilisées comme composant résineux.

6. Procédé selon la revendication 5, **caractérisé en ce que** les résines synthétiques sont issues de la famille des résines de coumarone-indène hydroxylées ou des résines d'hydrocarbures phénoliques.

7. Procédé selon les revendications 1 à 6, **caractérisé en ce que** des polymères du groupe des esters vinyliques, éthers vinyliques, esters acryliques, esters d'acide méthacrylique, styrènes, butadiènes, isoprènes ou leurs copolymères sont utilisés comme composant polymère.

8. Procédé selon les revendications 1 à 7, **caractérisé en ce que** du carbonate de calcium, du sulfate de calcium, du sulfate de baryum, des silicates ou des mélanges de ces matières sont utilisés comme matière de charge et adjuvant inorganique.

9. Procédé selon les revendications 1 à 8, **caractérisé en ce que** des hydrocarbures aliphatiques, des hydrocarbures cycloaliphatiques, des esters, des alcools aliphatiques, des cétones aliphatiques ou des mélanges de ces matières sont utilisés comme solvant.

10. Colle pour parquet selon les revendications 1 à 9 présentant une teneur de 0,05 à 5 % en poids d'un composant filmogène, par exemple des paraffines, des cires microcristallines, de la cire de carnauba, de la cire d'abeille, de la lanoline, de l'huile de baleine, des cires de polyoléfine, de la cérésine, de la cire de candelilla ou des substances cireuses apparentées.

11. Utilisation de paraffines, de cires microcristallines, de cire de carnauba, de cire d'abeille, de lanoline, d'huile de baleine, de cires de polyoléfine, de cérésine, de cire de candelilla ou de substances cireuses apparentées en tant que substances filmogènes empêchant la perméabilité de solvants organiques présentant un point d'ébullition inférieur à 100 °C, dans des colles pour parquets et revêtements.

12. Utilisation selon la revendication 11, les substances filmogènes étant utilisées dans une quantité correspondant à un pourcentage en poids compris entre 0,05 et 5 % de la somme des autres composants de la colle.
